# EUROPEAN PATENT SPECIFICATION

(11) **EP 1 583 645 B1**
(45) Date of publication and mention of the grant of the patent: **18.03.2009**
(21) Application number: 04702876.6
(22) Date of filing: 16.01.2004
(51) Int. Cl.: B29C 45/17, B29C 45/26

(54) **MOULD HOLDER**
FORMHALTER
SUPPORT DE MOULE

(30) Priority: 16.01.2003 NL 1022409
(43) Date of publication of application: 12.10.2005
(73) Proprietor: SPG Promatrix B.V., 3474 LA Zegveld (NL)
(72) Inventor: DE KONING, Abraham, Gijsbert, NL-3466 LE Waarder (NL)
(74) Representative: van Westenbrugge, Andries
(86) International application number: PCT/NL2004/000038
(87) International publication number: WO 2004/062878

(56) References cited:
- EP-A- 0 549 928
- DE-A- 19 627 176
- US-A- 4 500 275

## Description

The present invention relates to a mould holder comprising an accommodation for receiving a mould part according to the preamble of claim 1, a method for the production of a mould assembly according to the preamble of claim 9 and a method for operating an injection moulding machine according to the preamble of claim 10.

A mould holder according to the preamble of claim 1 is known from US-A-4,500,275.

DE 196 27 176 discloses a further mould holder wherein a mould part is received between mould holder parts. The mould part is provided with screw thread and bolts extending to the mould holder parts are received in said screw threads to clamp the mould holder parts against the mould holder.

Mould holders are generally used in the art to impart rigidity to mould parts that are relatively weak. Such separation of the mould part, in which the shape of the product to be injected has been made, and the mould holder is employed in particular if relatively small series, of up to approximately 1,000 items, have to be produced. In such a case the high costs for the production of a complete mould are not justified by the size of the series. Special series and prototypes are considered in particular here. In such cases the mould part is, for example, made of aluminium, which can be machined easily, or of another metal that can be machined easily.

If the mould becomes larger, the forces acting thereon for a given injection pressure will be appreciable. Large moulds are used, for example, in the automotive industry when producing large items from plastic, such as doors, wheel arches, bonnets and bumpers.

In order to obtain adequate rigidity for the actual mould part it is proposed in the state of the art to produce the mould holder from one part that is particularly rigid. This means that the size thereof as well as the weight is appreciable. This does not benefit the ease of handling and, moreover, it becomes increasing more difficult to place the various parts in an injection moulding machine. Moreover, with large dimensions it is difficult to provide an accurate fit between mould part and mould holder. However, stringent requirements are imposed on this fit. After all, if there is even only a slight gap between the two mould parts when the mould closes, a flash will be produced. The removal thereof is associated with appreciable post-machining costs and is not beneficial for the appearance of the product.

Despite the series being small, the costs of items rise appreciably if these require a post-machining step. The tolerance between the two mould parts stays the same as these become larger. After all, the properties of the plastic do not change with the size of the mould.

The aim of the present invention is to provide a mould holder for a mould part, which mould holder has a structure that is not too bulky, can be handled relatively easily and can accommodate the mould part accurately with small tolerance. This aim is realised with a mould holder having the features of claim 1, a method for the production of a mould assembly having the features of claim 9 and a method for operating an injection moulding machine having the features of claim 10.

According to the present invention the strength of the mould holder is obtained by prestressing. This prestressing acts in the sense of compression of the mould holder without deformation. As a result the strength, and thus the weight, of the mould holder can be relatively low because when the injection pressure, which can be many hundred tonnes, is applied, the amount of stress on the pre-stressed elements first has to be overcome before deformation of the mould holder takes place. As a result of the use of spacers it can be guaranteed that the mould part does not give way under the prestressing force. The spacers absorb the force applied between the end parts, whilst the spacers can also be prestressed with respect to one another. In order to be able to absorb the associated force, these are preferably made triangular, the thickest part being located between the ends thereof.

The prestressing force can be applied in any way known in the state of the art. According to an advantageous embodiment, tensioning rods are used. Very high forces can be applied by this means. A value of approximately 100 tonne per tensioning rod is mentioned by way of example. If, for example, there are 16 tensioning rods, a force of up to 1600 tonne can be absorbed during injection moulding before the material of the mould holder is subjected to tensile stress. It has been found that despite such a high prestressing force it is possible to work with very small tolerances between the mould part and the mould holder. Accuracies of 0.1 mm or less can be achieved, as a result of which the phenomenon of flash formation described above is avoided.

Another method for applying prestressing is hydraulic. With a hydraulic fluid pressure can be built up between the mould holder and the mould part. Such a fluid can, for example, be applied with a cylinder/piston combination and preference is given to providing the mould holder with a cavity in which a bag to be filled with hydraulic fluid is present. By this means a force can be applied that acts between the mould holder and the mould part. This is mainly used to absorb forces at right angles to the longitudinal direction of the mould holder. In any event the lowest spacers are provided with a recess close to the "raised" mid section for accommodating a bag to be filled with fluid. Such a bag is placed in each of the recesses. Of course, it is also possible to fit a single bag in two or more recesses.

This force is, however, applied only after closing the mould parts and/or during injection of the plastic. The force is removed again before the mould parts move apart. It has been found that with the tolerance described above the accuracy of the mould parts with respect to one another during closing is less than a few hundredths of a mm.

The mould holder according to the present invention is preferably used in the automotive industry, but other fields of application are possible.

The invention will be explained below with reference to an illustrative embodiment shown in the drawing. In the drawing:
Fig. 1 shows a perspective and partially exposed view of the construction according to the invention; and
Fig. 2 shows the lower holder without mould part in the completely assembled state.

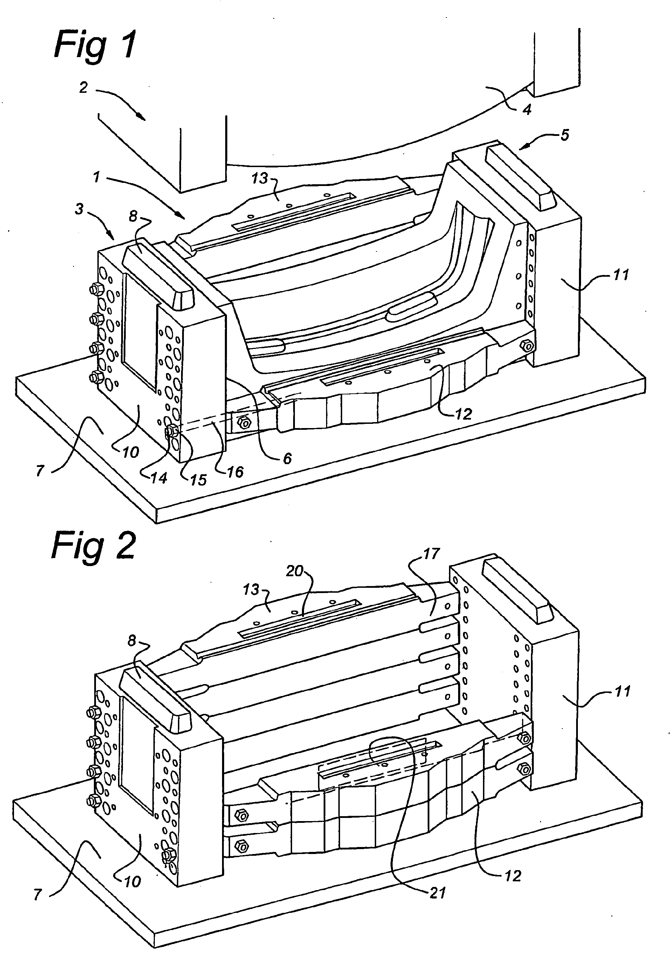

In Figures 1 and 2 the mould assembly according to the invention is indicated in its entirety by 1. This consists of a upper holder 2, which is indicated only highly diagrammatically, provided with a upper mould part 4. The lower holder 3 and the lower mould part 5 arranged therein are shown in more detail. An accomodation 6, within which the lower mould part is accommodated, is delimited within the lower holder. The lower mould part is provided with a plate 7 for fixing to an injection moulding machine, whilst there are centring ridges 8 which interact with the upper holder 2 so as to centre the mould parts with respect to one another.

The lower holder consists of end parts 10 and 11, located opposite one another, and spacers 12, 13 inserted between them. There are tensioning rods 14 that extend through bores 16, which rods are provided with nuts 15 close to the ends thereof. There are tensioning rods 17 in the bottom and top spacers 12, 13 and these extend through bores 18 ion the end part 10, 11. There are nuts 15 here in every case as well. The spacers 12 and 13 are of triangular construction.

It can be seen from Fig. 2 that there are a number of spacers 12, 13 which are arranged around the lower mould part 5 (not shown) when the holder part is built up. Each of these spacers 12, 13 is provided with a piston/cylinder unit 20, 21 and with openings 16 for the tensioning rods 14.

The structure described above functions as follows. A mould part of appreciable size is made from aluminium or other material that is easy to machine. This mould part is placed with a small tolerance of 0.1 mm in a mould holder such as the lower holder 3. This lower holder consists of two end parts 10, 11 positioned some distance apart, between which a number of spacers 12, 13 are stacked on top of one another as desired. In order to guarantee the correct mutual positioning of adjacent spacers 12, 13 and to ensure optimum transmission of forces, provision is made that each spacer 12, 13 is provided with a groove 20. As a result a cavity is always delimited between adjacent spacers 12 or 13, in which cavity a bag can be fitted. During the introduction of the mould part the rods 17 are not present and there is no tension on the rods 14. During the introduction the tensioning rods 17 are not yet present and the bag is not yet pressurised with a hydraulic fluid. The tensioning rods 17 are fitted after introducing the mould part.

After introducing the lower mould part into lower holder 3 in this way, the tensioning rods 14 and 17 are tensioned by tightening the nuts 15. As a result of the presence of the spacers 12, 13 and the inherent strength of the mould part, the end parts 10, 11 are prevented from being pulled too far towards one another. As a result of the triangular shape of the spacers 12, 13, these parts are prevented from moving too far apart. A prestressing force of approximately 100 tonne is applied to each of the tensioning rods. The upper holder with mould part is then placed in the injection moulding machine. Of course, prestressing can also take place in the injection moulding machine.

After the same action has optionally been carried out with the upper mould part, the injection moulding machine can be switched on. After the mould parts have closed, that is to say delimiting of the mould cavity, the bag is pressurised and further prestressing is applied. By applying prestressing in this way deformation in the transverse direction (squeezing) is prevented because additional strength is provided by the presence of the upper mould part. After the injection pressure has been released, the prestressing can again be removed and the mould parts can open (after adequate cooling).

It will be understood that a variant embodiment of the invention has been shown only diagrammatically in the drawing. Cooling systems and other special constructions in order to achieve optimum injection have not been shown and the presence thereof is obvious to those skilled in the art.

It has been found that with the construction described above it is possible to produce large parts (such as complete bumpers) with an injection moulding operation, where mould parts that are inexpensive to produce are used, without subsequent post-machining being necessary in order to remove flash and the like.

It will be understood that the invention is not restricted to the variant embodiment described above and that numerous modifications are possible which fall within the scope of the present invention as defined by the appended claims.

## Claims

1. Mould holder (2, 3) comprising a seat (6) for receiving a mould part (4, 5) and a fixing (7) for fixing to an injection moulding machine, **characterised in that** said mould holder comprises two end face parts (10, 11) located opposite one another and spacers (12, 13) arranged between them, wherein said seat (6) is delimited between said end parts and said spacers and wherein there are first prestressing means (14, 16) to pull said end face parts towards one another with prestressing.

2. Mould holder according to Claim 1, wherein there are second prestressing means (15, 17) to pull said spacers towards one another.

3. Mould holder according to one of the preceding claims, wherein said prestressing means comprise tensioning rods.

4. Mould holder according to Claim 3, wherein said prestressing means for drawing said end parts towards one another extend in said spacers.

5. Mould holder according to one of the preceding claims, wherein said spacers have a triangular shape.

6. Mould holder according to one of the preceding claims, wherein said prestressing means comprise hydraulic prestressing means (20, 21).

7. Mould holder according to Claim 6, having a hydraulically deformable part designed to move in said seat.

8. Mould holder according to one of the preceding claims, wherein the spacers consist of a number of spacer members placed on top of one another.

9. Method for the production of a mould assembly, comprising the provision of a mould holder with a seat and placing a mould part in said seat, wherein the mould holder comprises at least two mould holder parts joined to prestressing means, each of which mould holder parts delimit part of said seat and in that prestressing is applied to said prestressing means after said mould part has been introduced, said mould holder comprises two end face parts (10, 11) located opposite one another and spacers (12, 13) arranged between them wherein prestressing effects pulling said end face parts toward one another.

10. Method for operating an injection moulding machine, comprising fitting therein at least two mould parts that can be moved with respect to one another and delimit an injection moulding cavity between them, wherein at least one mould part is placed in a seat in a mould holder, which seat is positioned around said mould part with a tight fit by at least two mould parts held together by hydraulic prestressing, wherein said prestressing is applied after said mould parts have moved completely towards one another and is removed after injection of the plastic and before said mould parts move apart said mould holder comprises two end face parts (10, 11) located opposite one another and spacers (12, 13) arranged between them wherein prestressing effects pulling said end face parts toward one another.

## Patentansprüche

1. Formhalter (2, 3), enthaltend einen Sitz (6) für die Aufnahme eines Formteils (4, 5) und eine Befestigungseinrichtung (7) zum Befestigen an einer Spritzgießmaschine, **dadurch gekennzeichnet, dass** der Formhalter zwei Stirnflächenteile (10, 11), die einander gegenüberliegend angeordnet sind, und Abstandshalter (12, 13) enthält, die zwischen diesen angeordnet sind, wobei der Sitz (6) zwischen den Stirnteilen und den Abstandshaltern begrenzt ist und es erste Vorspanneinrichtungen (14, 16) gibt, die die Stirnflächenteile durch Vorspannung zusammenziehen.

2. Formhalter nach Anspruch 1, bei dem es zweite Vorspanneinrichtungen (15, 17) gibt, die die Abstandshalter zusammenziehen.

3. Formhalter nach einem der vorhergehenden Ansprüche, bei dem die Vorspanneinrichtungen Zugstäbe enthalten.

4. Formhalter nach Anspruch 3, bei dem sich die Vorspanneinrichtungen, die die Stirnteile zusammenziehen, in den Abstandshaltern erstrecken.

5. Formhalter nach einem der vorhergehenden Ansprüche, bei dem die Abstandhalter eine dreieckige Form haben.

6. Formhalter nach einem der vorhergehenden Ansprüche, bei dem die Vorspanneinrichtungen hydraulische Vorspanneinrichtungen (20, 21) beinhalten.

7. Formhalter nach Anspruch 6, der über ein hydraulisch verformbares Teil verfügt, das dazu eingerichtet ist, sich im Sitz zu bewegen.

8. Formhalter nach einem der vorhergehenden Ansprüche, bei dem die Abstandshalter aus einer Anzahl von Abstandshalteelementen bestehen, die übereinander angeordnet sind.

9. Verfahren für die Herstellung einer Formanordnung, enthaltend das Bereitstellen eines Formhalters mit einem Sitz und das Plazieren eines Formteils in diesem Sitz, wobei der Formhalter wenigstens zwei Formhalterteile enthält, die mit Vorspanneinrichtungen verbunden sind, wobei jedes Formhalterteil einen Teil des Sitzes begrenzt und die Vorspannung auf die Vorspanneinrichtungen ausgeübt wird, nachdem das Formteil eingeführt wurde, wobei der Formhalter wenigstens zwei Stirnflächenteile (10, 11), die einander gegenüberliegend angeordnet sind, und Abstandhalter (12, 13) aufweist, die zwischen diesen angeordnet sind, und die Vorspannwirkungen die Stirnflächenteile zusammenziehen.

10. Verfahren für den Betrieb einer Spritzgießmaschine, umfassend das Einfügen wenigstens zweier Formteile in diese, die im Bezug zueinander bewegt werden können und zwischen sich einen Spritzgießhohlraum begrenzen, wobei wenigstens ein Formteil in einem Sitz in einem Formhalter angeordnet wird, wobei dieser Sitz um das Formteil mit einer engen Passung durch wenigstens zwei Formteile positioniert wird, die durch hydraulische Vorspannung zusammengehalten werden, wobei die Vorspannung aufgewendet wird, nachdem sich die Formteile vollständig aufeinander zu bewegt haben, und sie nach dem Einspritzen von Kunststoff gelöst wird, und bevor sich die Formteile voneinander weg bewegen, der Formhalter zwei Stirnflächenteile (10, 11), die einander gegenüberliegend angeordnet sind, sowie Abstandshalter (12, 13) enthält, die zwischen diesen angeordnet sind, wobei Vorspannwirkungen diese Stirnflächenteile zusammenziehen.

## Revendications

1. Support de moule (2,3) comprenant un siège (6) pour recevoir une partie de moule (4,5) et une fixation (7) pour la fixation à une machine de moulage par injection, **caractérisé en ce que** ledit support de moule comprend deux parties de face d'extrémité (10,11) situées l'une en face de l'autre et des pièces d'écartement (12,13) disposées entre celles-ci, dans lequel ledit siège (6) est délimité entre lesdites parties d'extrémité et lesdites pièces d'écartement et dans lequel il y a des premiers moyens de précontrainte (14,16) pour tirer lesdites parties de face d'extrémité l'une vers l'autre sans précontrainte.

2. Support de moule selon la revendication 1, dans lequel il y a des deuxièmes moyens de précontrainte (15,17) pour tirer lesdites pièces d'écartement l'une vers l'autre.

3. Support de moule selon l'une quelconque des revendications précédentes, dans lequel lesdits moyens de précontrainte comprennent des tiges de mise en tension.

4. Support de moule selon la revendication 3, dans lequel lesdits moyens de précontrainte pour tirer lesdites parties d'extrémité l'une vers l'autre s'étendent dans lesdites pièces d'écartement.

5. Support de moule selon l'une des revendications précédentes, dans lequel lesdites pièces d'écartement ont une forme triangulaire.

6. Support de moule selon l'une des revendications précédentes, dans lequel lesdits moyens de précontrainte comprennent des moyens de précontrainte hydrauliques (20,21).

7. Support de moule selon la revendication 6, ayant une partie déformable hydrauliquement conçue pour se déplacer dans ledit siège.

8. Support de moule selon l'une des revendications précédentes, dans lequel les pièces d'écartement consistent en un nombre d'éléments d'écartement placés les uns sur les autres.

9. Procédé de production d'un ensemble de moule, comprenant la réalisation d'un support de moule avec un siège et le placement d'une partie de moule dans ledit siège, dans lequel le support de moule comprend au moins deux parties de support de moule reliées aux moyens de précontrainte, chacune desdites parties de support de moule délimite une partie dudit siège, et en ce qu'une précontrainte est appliquée auxdits moyens de précontrainte après que ladite partie de moule a été introduite, ledit support de moule comprend deux parties de face d'extrémité (10,11) situées l'une en face de l'autre et des pièces d'écartement (12,13) agencées entre elles, la précontrainte entraînant la traction desdites parties de face d'extrémité l'une vers l'autre.

10. Procédé pour faire fonctionner une machine de moulage par injection, comprenant l'installation dans celle-ci d'au moins deux parties de moule qui peuvent être déplacées l'une par rapport à l'autre et délimitent une cavité de moulage par injection entre elles, dans lequel au moins une partie de moule est placée dans un siège dans un support de moule, ledit siège est positionné autour de ladite partie de moule en un ajustement serré par au moins deux parties de moule maintenues ensemble par précontrainte hydraulique, où ladite précontrainte est appliquée après que lesdites parties de moule ont été déplacées complètement l'une vers l'autre et est retirée après l'injection du plastique et avant que lesdites parties de moule s'écartent l'une de l'autre, ledit support de moule comprend deux parties de face d'extrémité (10,11) situées l'une en face de l'autre et des pièces d'écartement (12,13) agencées entre elles, la précontrainte entraînant la traction desdites parties de face d'extrémité l'une vers l'autre.
